# EUROPEAN PATENT APPLICATION

(11) **EP 2 441 907 A1**
(43) Date of publication of application: **18.04.2012**
(21) Application number: 10780648.1
(22) Date of filing: 28.05.2010
(51) Int. Cl.: E05B 49/00

(54) **CARD KEY AND CARD LOCK**

(30) Priority: 29.05.2009 JP 2009130621
(71) Applicant: International Frontier Technology Laboratory Inc., Chiyoda-ku Tokyo 100-0014 (JP)
(72) Inventor: KOMATSU, Nobuaki, Tokyo 105-0001 (JP); NANJO, Shin-ichiro, Tokyo 174-0064 (JP)
(74) Representative: Wotherspoon, Hugh Robert
(86) International application number: PCT/JP2010/059098
(87) International publication number: WO 2010/137694

(57) **Abstract**

To acquire a keycard, the creation of whose clone is impossible, and a keycard-lock that is locked/unlocked by the keycard.

Key information constituted by randomly disposed metal granules, fiber pieces, a hologram chip, fluorescent substance granules, radioactive substance granules, or iridescent material, which is obtained by chance, is provided to a card. By inserting the keycard into the keycard-lock, and storing data based on the key information of the keycard in the keycard-lock, the keycard is registered in the keycard-lock. The data is encrypted by using a crypt key stored in the keycard-lock. By comparing the data of keycard inserted into the keycard-lock and the data obtained by decrypting the encrypted data registered in the keycard-lock, the keycard-lock is locked/unlocked. In addition, data based on the information of the keycard is encrypted and stored in a self-certifying keycard information chip installed in the keycard.

## Description

### Field of The Invention

The present invention according to this application generally relates to a key/lock system for locking/unlocking using a keycard having the shape of a card, and in particular, to a keycard used in an immobiliser system adopted for vehicles for theft-prevention purposes, and a keycard-lock which is locked/unlocked by the keycard.

### Background Art

Since mechanical keys having the shape of so-called keys require thickness, they are not considered so handy for carrying around. As a countermeasure, keycards fitting the shape of credit cards or the like are becoming widely used. The keycard has mechanical information, magnetic information, data stored in an IC chip and the like, in a card-shaped body constituted from various materials, and the lock determines whether or not to do the lock/unlock operation.

Immobiliser systems for vehicle theft-prevention purposes are becoming more common. In these immobiliser systems, a computer on the vehicle side determines whether or not the ID of the IC chip embedded in the key correspond to the vehicle, enables the ignition key if determined corresponding and disables the ignition key if determined not corresponding.

Even if the key information of the immobiliser is encrypted, there are cases where the encryption is cryptanalyzed, and duplicating the key by using the cryptanalyzed key information is not difficult.

Moreover, if clones of the key are created, preventing duplication cannot be expected at all.

### References

[Document 1] JP-A-10-44650
[Document 2] JP-A-2003-29636
[Document 3] WO2007/072793
[Document 4] WO2007/072794
[Document 5] WO2007/072795
[Document 6] WO2007/072796
[Document 7] WO2008/143087

### Disclosure of The Invention

### Object of The Invention

With the exception of special keys such as master keys, a key needs to lock/unlock a particular lock, and does not lock/unlock plural locks.
It is an object in this application to obtain a keycard, the creation of whose clone is impossible, and a keycard-lock that is locked/unlocked by the keycard.

In a facility where plural relevant parties come in and out, when entering the premises or a room needs to be restricted, such measures are taken as preparing plural keys or using a password; however, with such measures, it is not possible to know who enters the premises or the room.
This application provides a keycard with which it is possible to know who enters the premises or the room even in the above case, and a keycard-lock that is locked/unlocked by the keycard.

### Means

In order to cope with the above, this application provides the following means.

The following can be adopted for an information carrier formed on a card: metal granules mixed into a transparent medium described in JP-A-10-44650; fiber pieces mixed into a transparent medium described in JP-A-2003-29636; a hologram described in WO2007/072794, fluorescent substance granules described in WO2007/072795, radioactive substance granules described in WO2007/072796 and iridescent material described in WO2008/143087.

In addition to means to read the information carrier, as described in JP-A-10-44650, JP-A-2003-29636, WO2007/072793, WO2007/072794, WO2007/072795 and WO2007/072796, plural reading means are provided so as to read the information carrier from various directions.

Data stored in the keycard-lock is encrypted/decrypted using a crypt key stored in the lock.

In order to strengthen the correspondence between the keycard-lock and the keycard, variations are given to the configuration of the reading device in the keycard-lock.

In addition, a storage medium such as an optical medium, a magnetic medium and an IC chip is mounted on the card to store the keycard information that is encrypted by using cryptography described in WO2007/072793 and WO2008/143087.

Three-dimensional information includes those given to the entire surface of and to a portion of the keycard.

In order to prevent damages and stains to the keycard, the keycard is housed in a cassette with a shutter.

### Advantages of The Invention

Since the metal granules mixed into a transparent medium described in JP-A-10-44650, the fiber pieces mixed into a transparent medium described in JP-A-2003-29636, the hologram described in WO2007/072794, the fluorescent substance granules described in WO2007/072795, the radioactive substance granules described in WO2007/072796 and the iridescent material described in WO2008/143087, which are formed on the card in the invention according to this application, all have a three-dimensional placement, duplicating or cloning them is impossible.

Having a self-certifying chip used for certifying the validity of the keycard itself provided non-separably on the keycard improves security.

Having the keycard be housed in the cassette prevents the keycard from being damaged or stained.

Having the keycard be registered in the lock with which the keycard is used, disables unlocking with another unregistered key.

Varying the characteristics of the reading device in the keycard-lock strengthens the correspondence between the keycard-lock and the keycard.

By providing an ID to the keycard, it is also possible to disable a particular keycard.

Since the usable keycards are registered in the keycard-lock, it is possible to know who is entering the premises or the room according to the keycard-lock.

Since the keycard becomes usable by registration, a master key can be acquired by registering one keycard in plural keycard-locks.

By being registered in a keycard-lock, a keycard becomes usable in the keycard-lock; thus, when plural keycards are registered in one keycard-lock, it is possible for plural persons to unlock the keycard-lock, and is also easy to make spare keys.

### Brief Descriptions of The Drawings

Fig. 1 shows the structure of a keycard information chip used in a keycard of the present invention, in which metal granules are dispersed in a transparent medium;
Fig. 2 shows the structure of a keycard information chip used in a keycard of the present invention, in which fiber pieces are dispersed in a transparent medium;
Fig. 3 shows the structure of a non-duplicable monochromatic embossed hologram keycard information chip used in a keycard of the present invention, arranged regularly and formed by chance;
Fig. 4 shows the structure of a non-duplicable monochromatic embossed hologram keycard information chip used in a keycard of the present invention, arranged and formed by chance;
Fig. 5 shows the structure of a non-duplicable multicolored embossed hologram keycard information chip used in a keycard of the present invention, arranged and formed by chance;
Fig. 6 shows the structure of a keycard information chip used in a keycard of the present invention, in which fluorescent substance granules are dispersed in a transparent medium;
Fig. 7 shows the structure of a keycard information chip used in a keycard of the present invention, in which radioactive substance granules are dispersed in a transparent medium;
Fig. 8 shows the structure of a keycard information chip used in a keycard of the present invention, in which monochromatic iridescent pieces are arranged randomly;
Fig. 9 shows the structure of a keycard information chip used in a keycard of the present invention, in which monochromatic iridescent pieces are arranged regularly;
Fig. 10 shows the structure of a keycard information chip used in a keycard of the present invention, in which multicolored iridescent pieces are arranged randomly;
Fig. 11 shows the structure of an iridescent keycard information chip used in a keycard of the present invention, which is formed unevenly by spreading;
Fig. 12 shows the structure of a multicolored iridescent keycard information chip used in a keycard of the present invention, which is formed by randomly sprayed droplets;
Fig. 13 shows the structure of a keycard of Embodiment 1;
Fig. 14 shows the structure of a keycard of Embodiment 2;
Fig. 15 shows the structure of a keycard housed in a cassette of Embodiment 3;
Fig. 16 shows the structure of a keycard housed in a cassette of Embodiment 4;
Fig. 17 shows the structure of a keycard housed in a cassette of Embodiment 5;
Fig. 18 illustrates a keycard/keycard-lock system of Embodiment 6;
Fig. 19 illustrates a keycard/keycard-lock system of Embodiment 7;
Fig. 20 illustrates a keycard/keycard-lock system of Embodiment 8;
Fig. 21 shows the structure of a keycard of Embodiment 9;
Fig. 22 shows the structure of a keycard of Embodiment 10;
Fig. 23 shows the structure of a keycard stored in a cassette of Embodiment 11;
Fig. 24 shows the structure of a keycard stored in a cassette of Embodiment 12;
Fig. 25 illustrates a method of manufacturing a keycard of Embodiment 13;
Fig. 26 illustrates a method of manufacturing a keycard of Embodiment 14;
Fig. 27 illustrates a method of manufacturing a keycard of Embodiment 15;
Fig. 28 illustrates a method of manufacturing a keycard of Embodiment 16;
Fig. 29 illustrates a device of a keycard-lock of Embodiment 17;
Fig. 30 illustrates a device of a keycard-lock of Embodiment 18;
Fig. 31 illustrates a device of a keycard-lock of Embodiment 19;
Fig. 32 illustrates a device of a keycard-lock of Embodiment 20;
Fig. 33 illustrates a method of reading the keycard information of Embodiment 21;
Fig. 34 illustrates further the method of reading the keycard information of the Embodiment 21;
Fig. 35 illustrates a method of reading the keycard information of Embodiment 22.

### Descriptions of The Invention

Description will be given below on embodiments of the invention relating to the present patent application.
First, a copy-unable information carrier adopted in the present invention will be described.

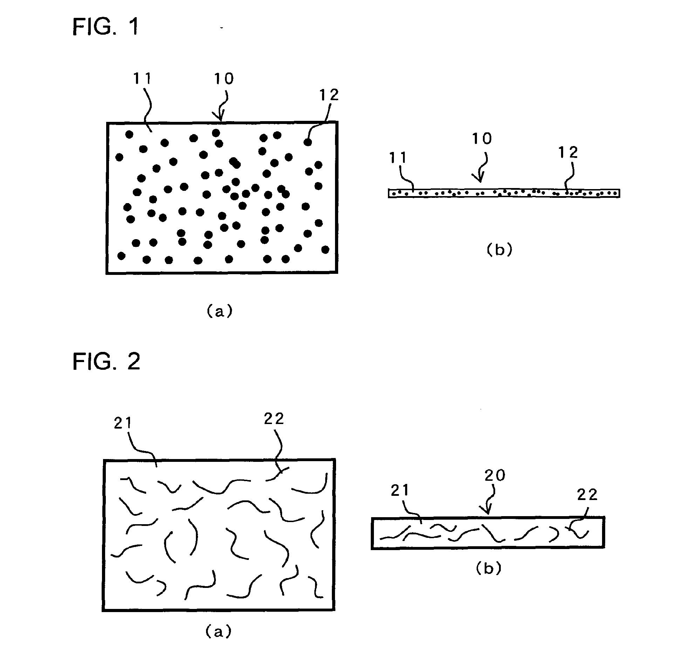

A keycard information chip 10 shown in Fig. 1 uses metal granules described in JP-A-10-44650 for the information carrier.
Fig. 1 (a) is a plan view and Fig. 1 (b) is a cross-sectional view.
This keycard information chip 10 has metal granules 12 mixed randomly in a transparent resin 11 by such means as scattering or blending for the information carrier.

Since the positions of the metallic granules 12 serving as the information carrier in the transparent resin 11 are not only random but also three-dimensional, the information pattern of the keycard information chip cannot be optically duplicated.

A keycard information chip 20 shown in Fig. 2 uses fiber pieces described in JP-A-2003-29636 for the information carrier.
Fig. 2 (a) is a plan view and Fig. 2 (b) is a cross-sectional view.
This keycard information chip 20 has plural fiber pieces 22 randomly mixed in a transparent resin 21 by such means as scattering or blending.

Since the positions and sizes of the fiber pieces 22 serving as the information carrier in the transparent resin 21 are not only random but also three-dimensional, the information pattern of the keycard information chip cannot be optically duplicated.

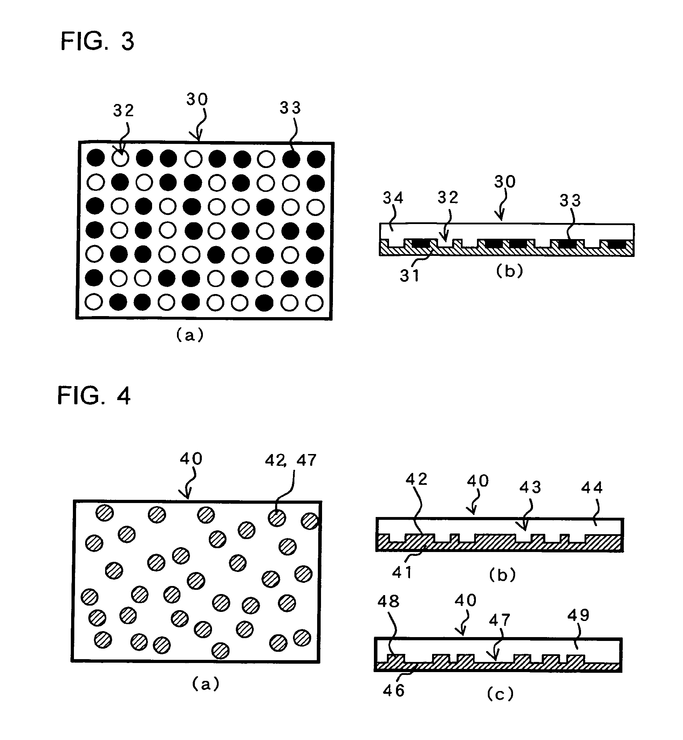

Keycard information chips shown in Figs. 3 to 5 use a pit-type or a stud-type embossed hologram described in WO2007/072794 for the information carrier.

A pit-type embossed hologram shown in Fig. 3 functions as an embossed hologram only with the light having a particular wavelength.
Fig. 3 (a) is a plan view and Fig. 3 (b) is a cross-sectional view.
On this keycard information chip 30, pits 32 disposed regularly on the upper surface of a substrate 31 are filled with a resin 33 at random positions by such means as scattering, and only the pits that are not filled with resin function for the pit-type embossed hologram. Reference numeral 33 shows a transparent resin which covers the entirety.

On the information carrier of the pit-type embossed hologram keycard information chip, plural pits 32 are formed at random positions by such method as scattering an etching material on the substrate 31, and a light-reflecting layer is formed over the entire keycard information chip. The light reflected at the upper edge of the pit 32 interferes with the light reflected at the bottom of the pit 32, so that the chip functions as a pit-type embossed hologram chip.

The positions of the pits 32 serving as the information carrier are randomly selected by the resin 33 scattered. When the amount of the scattered resin 33 is insufficient or excessive for the pit, such the pit does not function as the pit-type embossed hologram with the incident light. The pit-type embossed hologram information pattern cannot be optically duplicated.

Since the positions and the sizes of the pits 32 serving as the information carrier are not only random but also three-dimensional, the information pattern of the keycard information chip cannot be optically duplicated.

On a keycard information chip 40 shown in Fig. 4, plural pits 42 or plural studs 47 arranged at random positions function with respect to the light having a particular wavelength as the embossed hologram.
Fig. 4 (a) is a plan view, Fig. 4(b) is a cross-sectional view of the pit-type embossed hologram, and Fig. 4 (c) is a cross-sectional view of the stud-type embossed hologram.

On the pit-type embossed hologram keycard information chip shown in Fig. 4(b), plural pits 43 are disposed by means such as etching at random positions on the upper surface 42 on a substrate 41, and a light-reflecting layer is provided over the entire embossed hologram keycard information chip. The light reflected at the upper edge of the pit 43 interferes with the light reflected at the bottom of the pit 42, so that the pit functions as a pit-type embossed hologram chip. Reference numeral 43 represents a transparent resin which covers the entire surface of the pit-type embossed hologram keycard information chip 40.

Since the positions and the sizes of the plural pits 42 serving as the information carrier are not only formed by chance but also having three-dimensional shape, the information pattern of the pit-type embossed hologram keycard information chip cannot be optically duplicated.

On the stud-type embossed hologram keycard information chip shown in Fig. 4 (c), plural studs 48 are disposed by means such as scattering a resin at random positions on the upper surface 47 of a substrate 46. A light-reflecting layer is formed over the entire stud-type embossed hologram keycard information chip. The light reflected at the upper edge of the stud 48 interferes with the light reflected at the base portion of the stud 48, so that the pit functions as an embossed hologram chip. Reference numeral 49 represents a transparent resin which covers the entire surface of the stud-type embossed hologram keycard information chip.

Since the positions and the sizes of the studs 48 serving as the information carrier are not only random but also three-dimensional, the information pattern of the stud-type embossed hologram keycard information chip cannot be optically duplicated.

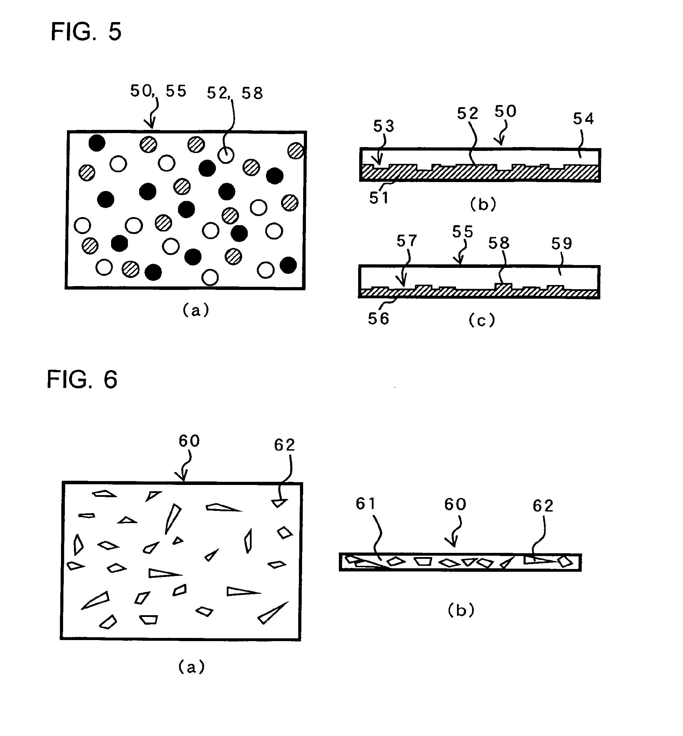

On an embossed hologram keycard information chip 50 shown in Fig. 5, plural pits 52 each having a different depth, or plural studs 57 each having a different height, which are arranged at random positions, function for the embossed hologram chip with respect to the light having a particular wavelength.
Fig. 5 (a) is a plan view, Fig. 5 (b) is a cross-sectional view of the pit-type embossed hologram chip, and Fig. 5 (c) is a cross-sectional view of the stud-type embossed hologram chip.

On the pit-type embossed hologram keycard information chip shown in Fig. 5 (b), plural pits 53 each having a different depth formed by means such as etching at random positions on the upper surface 52 of a substrate 51, and a light-reflecting layer is provided over the entire pit-type embossed hologram keycard information chip. The light reflected at the upper edge of the pit 53 interferes with the light reflected at the bottom of the pit 53, so that the chip functions as a pit-type embossed hologram. Reference numeral 54 represents a transparent resin which covers the entire surface of the pit-type embossed hologram keycard information chip.

Since the positions, the depths and the sizes of the plural pits 53 serving as the information carrier are not only random but also three-dimensional, the information pattern of the pit-type embossed hologram keycard information chip cannot be optically duplicated.

On the stud-type embossed hologram keycard information chip shown in Fig. 5 (c), plural studs 58 each having a different height formed by means such as scattering a resin at random positions on the upper surface 57 of a substrate 56, and a light-reflecting layer is provided over the stud-type embossed hologram keycard information chip. The light reflected at the upper edge of the stud 58 interferes with the light reflected at the base portion of the stud 58, so that the chip functions as a stud-type embossed hologram. Reference numeral 59 represents a transparent resin which covers the entire surface of the stud-type embossed hologram keycard information chip.

Since the positions, the heights and the sizes of the plural studs 58 serving as the information carrier are not only random but also three-dimensional, the information pattern of the stud-type embossed hologram keycard information chip cannot be optically duplicated.

A keycard information chip 60 shown in Fig. 6 is an example in which fluorescent granules are used, as described in WO2007/072795, as the information carrier.
Fig. 6 (a) is a plan view and Fig. 6 (b) is a cross-sectional view.

Fluorescent substance granules 62 are dispersed and randomly arranged in a transparent resin 61 of the keycard information chip 60 as the information carrier. A fluorescent substance is arbitrarily selected so that an information pattern which emits fluorescence of plural wavelengths can be obtained.
Since the positions of the fluorescent granules 62 in the transparent resin 61 and fluorescence thus obtained serving as the information carrier are not only random but also three-dimensional, the information pattern cannot be optically duplicated.

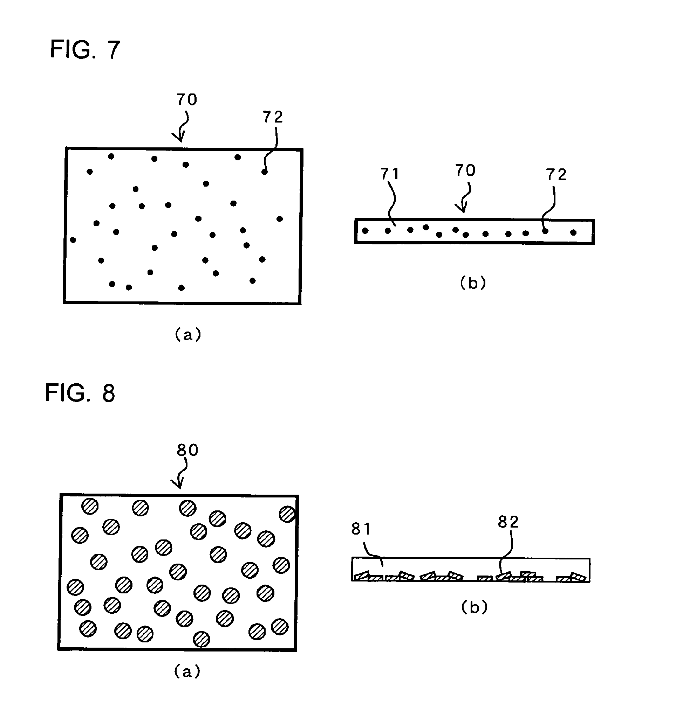

A keycard information chip 60 shown in Fig. 7 uses radioactive substance granules described in WO2007/072796 for the information carrier.
Fig. 7 (a) is a plan view and Fig. 7 (b) is a cross-sectional view.

Radioactive substance granules 72 are dispersed and randomly arranged in a resin 71 of the keycard information chip 70.
Since the positions of the radioactive substance granules 72 in the transparent resin 71 serving as the information carrier are not only random but also three-dimensional, the information pattern cannot be optically duplicated.

The keycard information chips shown in Figs. 8 to 12 use an iridescent material described in WO2008/143087 for the information carrier.

The iridescence and the embossed hologram are both phenomena occurring by interference of light in a colorless and transparent medium; however, the observed events are different. The embossed hologram is caused by a phenomenon in which light does not outgo due to the interference at the edge, and the iridescence is a phenomenon in which a particular light outgoes strongly by interferences on the surface.
Even with the same iridescent piece, if the light incident angles are different and the path lengths are different, a different iridescence appears. Accordingly, it is impossible to acquire the same iridescence.

Although phenomena in which lights of various wavelengths are observed with plate-type, sheet-type, and laminated-type substances are sometimes called holograms, most of such phenomena are not holograms but of the iridescence.

On a keycard information chip 80 shown in Fig. 8 (a), thin iridescent pieces 82 having a structure in which a thin film is coated on a thin resin piece, are randomly dispersed and arranged in a transparent resin 81, as shown in the cross-sectional view Fig. 8 (b).

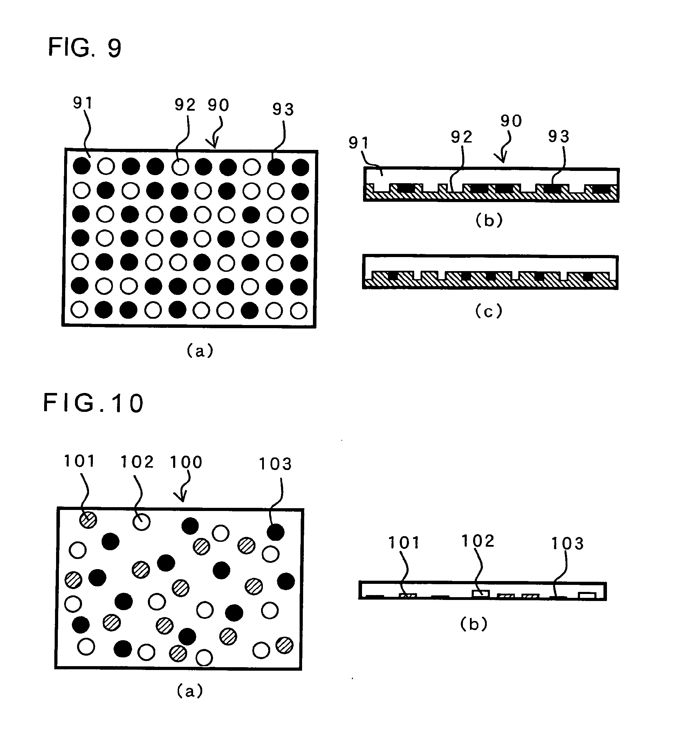

On a keycard information chip 90 shown in Fig. 9, pits 92 having the depth of one fourth of the used light wavelength are regularly arranged, which are randomly filled with resin 93 or the like, as shown in Fig. 9. (b), whereby iridescence appears by the filling resin 93 and/or the resin 91 covering the entirety.

On a keycard information chip 100 shown in Fig. 10, thin iridescent pieces 101, 102, 103 having multiple types of thickness are dispersed and randomly arranged in the transparent resin medium as shown in Fig. 10 (b). The variety of iridescence randomly appears due to the thicknesses of the thin iridescent pieces.

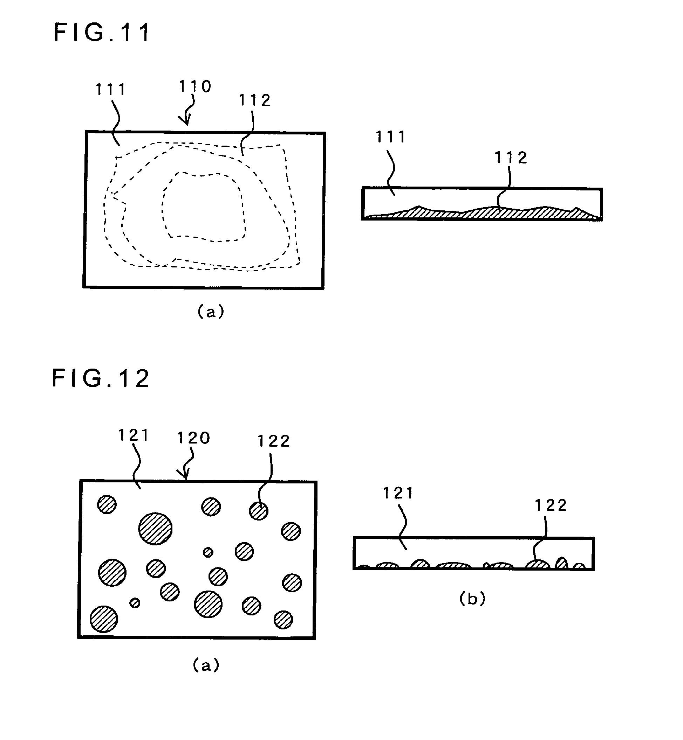

On a keycard information chip 110 shown in Fig. 11, a material 112 such as a resin having fluidity is unevenly spread and then solidified, and the entirety is covered by a resin 111.
The color and the position of the occurrence of the iridescence appearing in this configuration are random completely by chance.

On a keycard information chip 120 shown in Fig. 12, droplets of a material 122 such as a resin having fluidity, instead of the thin iridescent pieces, sprayed and then solidified, and the entirety is covered by a resin 121.
The color and the position of the occurrence of the iridescence appearing in this configuration are also random completely by chance.

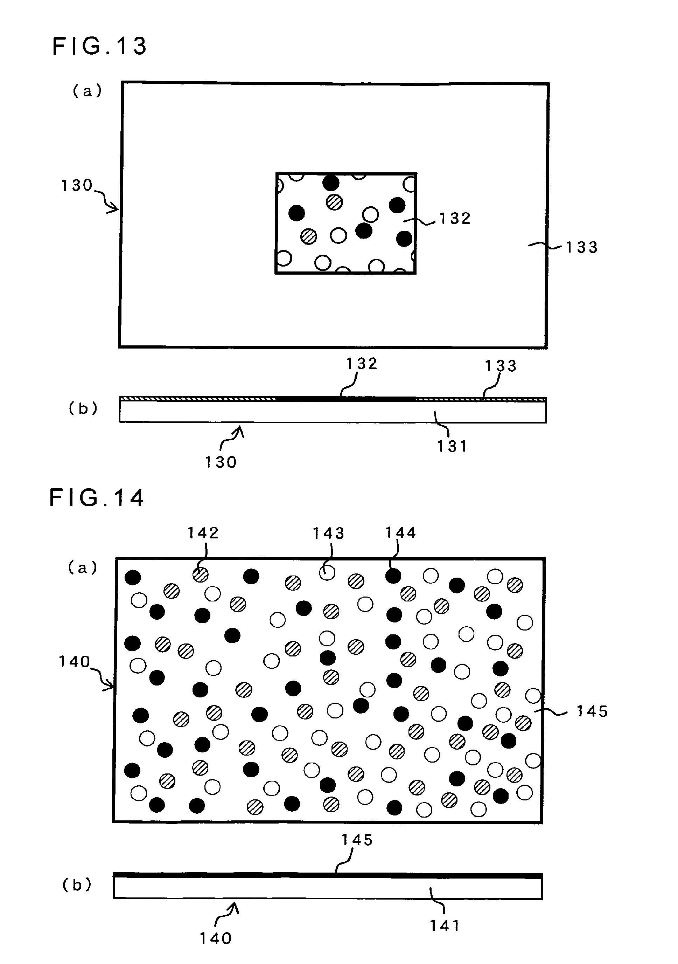

Embodiments of a keycard constituted by adopting the keycard information chip described in Figs. 1 to 12 will be described referring to Figs. 13 to 21.
It should be noted that although in these Embodiments, the thin iridescent pieces described referring to Fig. 10 are used as the information carrier for the keycard information chip, naturally, other metal granules, fiber pieces, hologram, fluorescent substance granules, radioactive substance granules, iridescent material may also be adopted.

### [Embodiment 1]

Fig. 13 shows a keycard. Fig. 13 (a) shows a general view of a keycard of Embodiment 1 in which a keycard information chip is mounted on a portion thereof and Fig. 13 (b) a cross-sectional view.
On a keycard 130, a keycard information chip 132 is non-removably mounted at the center of a surface plate 133 attached to a substrate 131.
In the mounting configuration shown here, the small keycard information chip 132 is placed at the center of the surface plate 133, while the mounting position and the size of the keycard information chip 132 are not limited to this example, and various positions may be possible.

### [Embodiment 2]

While the keycard 130 shown in Fig. 13 has the small keycard information chip 132 placed at the center of the surface plate 133, the entire surface of a keycard shown in Fig. 14 is a keycard information chip, in other words, the keycard itself serves as a keycard information chip. Therefore, the security of the keycard is improved.

Fig. 14 (a) shows a general view of a keycard and Fig. 14 (b) a cross-sectional view.
On a keycard 140, thin iridescent pieces 142, 143, 144 which constitute an information pattern are embedded at random positions in a transparent resin 145 which covers the entire surface of a substrate 141.
For the reading of the information pattern, the entire surface of the keycard information chip 140 may be read.

### [Embodiment 3]

Since the keycard information chip of the card described in Figs. 1 to 12 has optical information except for radioactive substance granules shown in Fig. 7, the resistance properties against damages and stains on the card surface are low.
Since a card used as a key is often placed in a pocket or a bag not in order, the risk of damaging and staining is high.
Accordingly, the keycard information chip that is to be read is protected by a shutter.

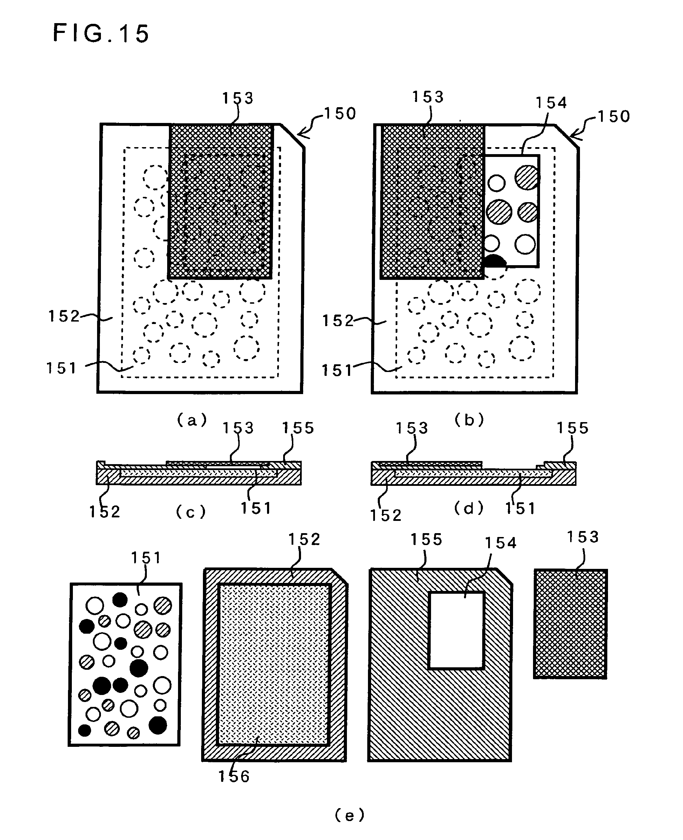

Fig. 15 shows an example in which a shutter opening sideways is adopted.
Figs. 15 (a) and (c) show when the shutter is closed while the keycard is not in use, Figs. 15 (b) and (d) show when the shutter is opened while the keycard is in use, and Figs. 15 (c) and (d) are cross-sectional views.
Fig. (e) is an exploded view of elements constituting the keycard.

A keycard 150 includes a keycard body 151, a container 152 having a housing 156 for the keycard body 151, a cover plate 155 in which a window 154 for reading is formed and which covers the container 152 containing the keycard body 151, and a shutter 153 which is mounted on the cover plate 155 and opens and closes the window 154 by sliding right and left.

Except for the point that the keycard contained does not rotate, this configuration may directly adopt a shutter structure used for 3.5-inch flexible disk or the like.
In this case, in order to restrict the direction of insertion, the shape of the keycard is not square, and a suitable configuration may be adopted, for example, by forming a cut portion at the head thereof and indicating the direction of insertion on the surface.

When the keycard 150 is inserted in a reading device in accordance with the indication of the insertion direction, the shutter 153 that has been closed as shown in Fig. 15 (a) is opened by the reading device as shown in Fig. 15 (b), so that the information pattern formed on the keycard body 151 can be read through the window 154.

### [Embodiment 4]

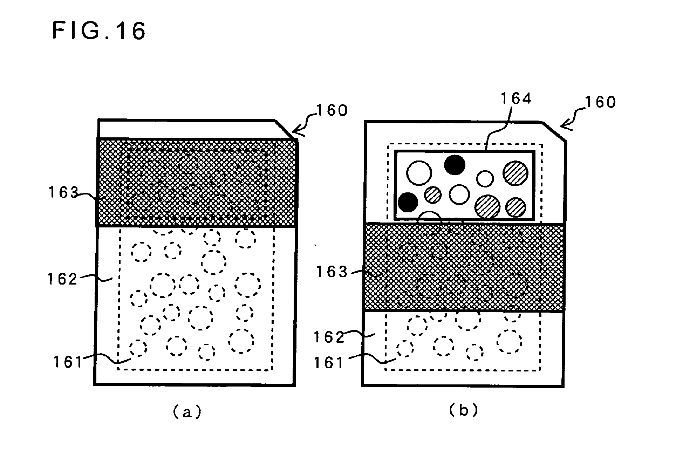

Fig. 16 shows an Embodiment in which a shutter opening longitudinally is adopted.
Fig. 16 (a) shows when the shutter is closed while the keycard is not in use, and Fig. 16 (b) when the shutter is opened while the keycard is in use.
The cross-sectional view and the exploded view shown in Fig. 15 are omitted for simplicity of the description.

A keycard 160 includes a keycard body 161, a container 162 having a housing for the keycard body 161, a cover plate in which a window 164 for reading is formed and which covers the container 162 containing the keycard body 161, and a shutter 163 which is mounted on the cover plate and opens and closes the window 164 by sliding up and down.

When the keycard 160 is inserted in a reading device in accordance with the indication of the insertion direction, the shutter 163 that has been closed as shown in Fig. 16 (a) is opened by the reading device as shown in Fig. 16 (b), so that the information pattern of the keycard information chip formed on the keycard body 161 can be read through the window 164.

### [Embodiment 5]

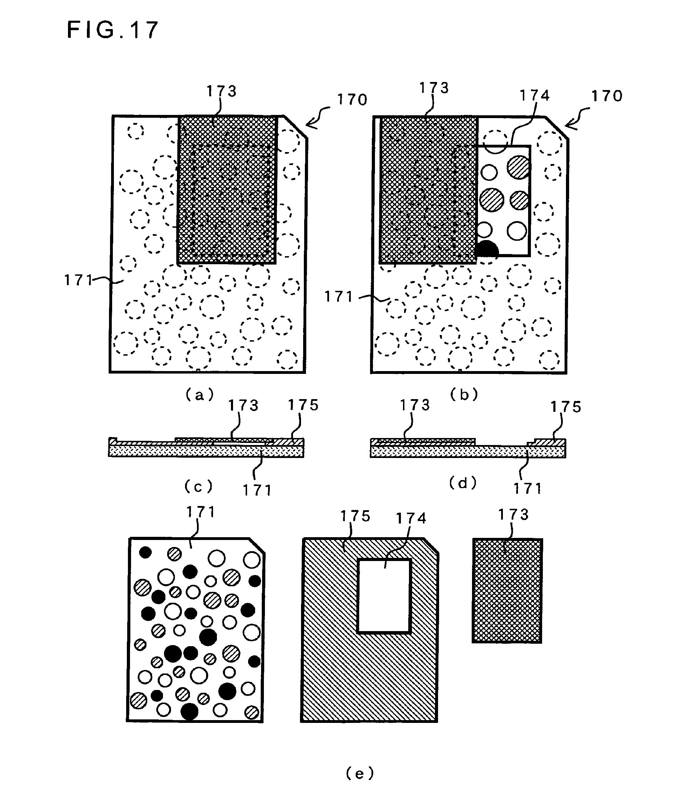

Since there is no limitation on the thickness of the keycard itself, the container is not required if the thickness of the keycard itself is increased.
Embodiment of this configuration is shown in Fig. 17.
The keycard having this configuration has a small number of parts and a simple structure.
Although Embodiment of Fig. 17 adopts a shutter opening sideways, a shutter longitudinally opening may be used as in Embodiment of Fig. 16.

Figs. 17 (a) and (c) show when the shutter is closed while the keycard is not in use, (b) and (d) show when the shutter is opened while the keycard is in use, and (c) and (d) are cross-sectional views.
Fig. 17 (e) is an exploded view of elements constituting the keycard.

A keycard unit 170 includes a keycard 171 having a sufficient thickness to be a container, a cover plate 175 in which a window 174 for reading is formed and which covers the keycard 171, and a shutter 173 which is mounted on the cover plate 175 and opens and closes the window 174 by sliding right and left.

Since the usage and the operation of the shutter are the same as those of the keycard shown in Fig. 15 or Fig. 16, the description will be omitted.

### [Embodiment 6]

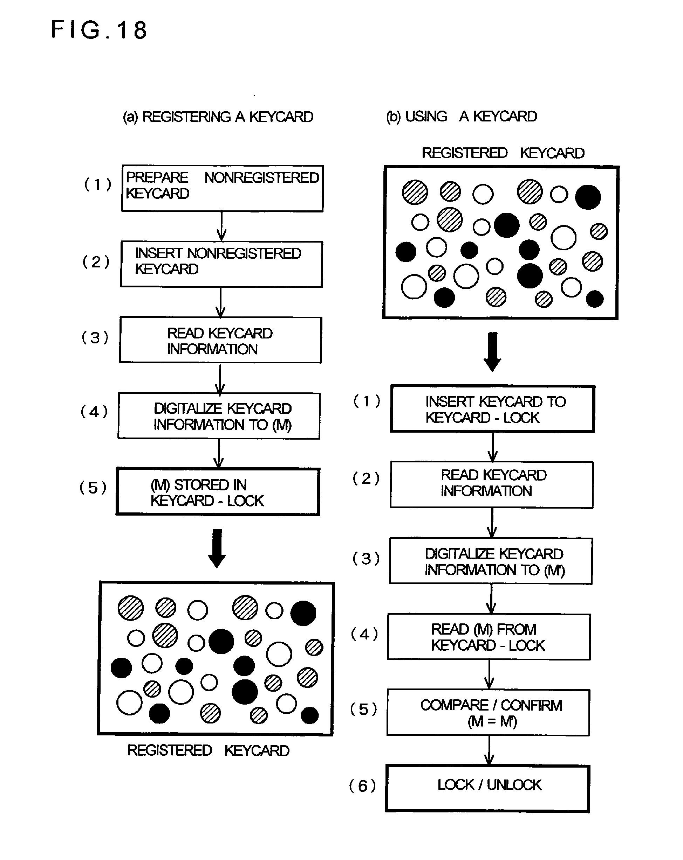

Fig. 18 describes a performing example of a reading device side of a keycard-lock when using a keycard of the present invention.
Fig. 18 (a) shows steps of preparing the keycard for use, and (b) shows steps of processing when using the keycard.
These steps are performed by optical reading or radiation detection means and a computer.

Fig. 18 (a) shows the steps of registering the keycard.
(1) A keycard which has not been registered is prepared.
In the nonregistered keycard, a keycard information chip is formed as a chip as shown in Fig. 13 or on the entire surface of the keycard as shown in Fig. 14.
In addition, if needed, in order to prevent damages and stains, as shown in Figure 15, 16 or 17, the keycard may be contained in a set with a shutter.
Since the keycard information chip has the information of the type, the planar placement and the three-dimensional placement which are determined by chance, forgery and duplication are impossible.

(2) The keycard is, for registration, inserted into the keycard-lock with which the key is used.

(3) Analog information, which the keycard information chip has, is read by the reading device of the keycard-lock.
If the reading device, which will be described later, is constituted in such a way that there are variations in the reading by the reading device, combined with the analog information on the keycard information chip, that strengthens the correspondence between the keycard and the keycard-lock.

(4) In order to digitally process the pattern to be recognized, the analog information of the keycard information chip, thus read, is digitalized to digital data (M).
In this digitalization as well, similarly to the reading of analog information, by using structural variations of the reading device in the reading and by using time axis variations, threshold variations and the like in the digitalization, it strengthens the correspondence between the keycard and the keycard-lock.

(5) The digitalized data (M) is stored in the memory of the keycard-lock, and the keycard is registered in the keycard-lock.

Fig. 18 (b) shows the steps of using the keycard to lock/unlock the lock.
(1) The keycard that has been registered is inserted into the keycard-lock.

(2) The analog information which is the pattern to be recognized is read by the reading device of the keycard-lock.

(3) The analog information thus read, which is the information of the keycard information chip is digitalized to digital data (M').

(4) The stored digital data (M) is read out from the memory of the keycard-lock.

(5) The digital data (M' ) of the keycard which is inserted and the digital data (M) read from the keycard-lock are compared and confirmed that they are equal.

(6) If the digital data (M' ) and digital data (M) are equal, the keycard-lock is locked/unlocked.

If the digital data (M' ) and digital data (M) are not equal, and more than one digital data is stored, plural digital data are sequentially read out, compared and confirmed.

If all digital data do not match, the keycard is determined to be illegitimate, or to have any damage or stain, and the keycard-lock is not locked/unlocked.

### [Embodiment 7]

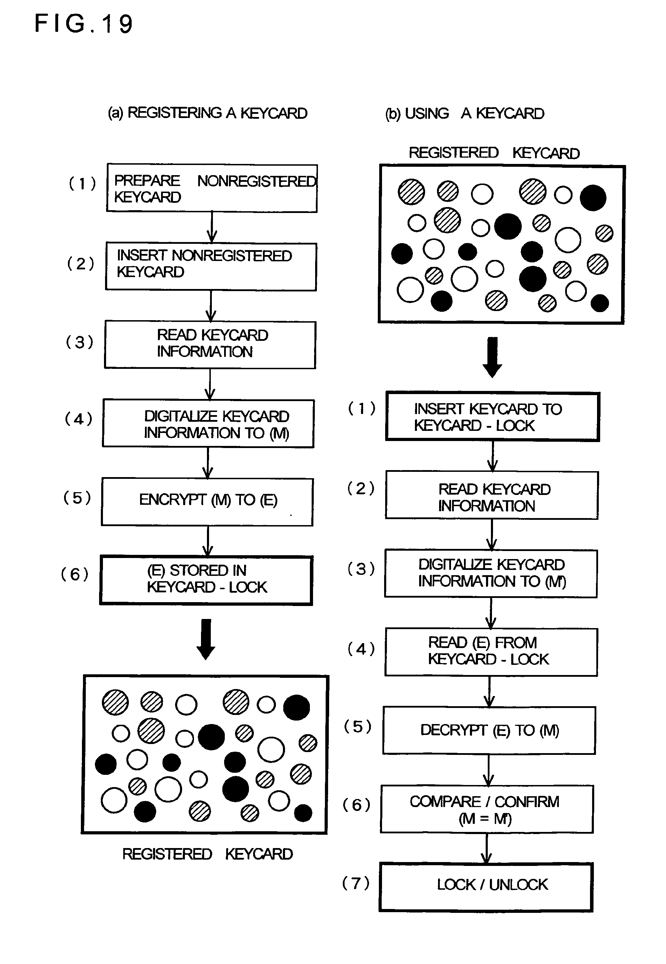

Fig. 19 describes another performing example of a reading device side of the keycard-lock when using the keycard of the present invention.
In this Embodiment, cryptography is used for security.
Fig. 19 (a) shows steps of preparing the keycard for use, and (b) shows steps of processing when using the keycard to lock/unlock the keycard-lock.
These steps are performed by optical reading or radiation detection means and a computer.

Fig. 19 (a) shows the steps of registering the keycard.
(1) A keycard which has not been registered is prepared.
In the nonregistered keycard, a keycard information chip is formed as a chip as shown in Fig. 13 or on the entire surface of the keycard as shown in Fig. 14.

(2) The keycard is, for registration, inserted into the keycard-lock with which the keycard is used.

(3) Analog information, which the keycard information chip has, is read by the reading device of the keycard-lock.

(4) In order to digitally process the pattern to be recognized, the analog information of the keycard information chip, thus read, is digitalized to digital data (M).

(5) The digital data (M) is encrypted by a crypt key stored in the keycard-lock to encrypted data (E).

(6) The encrypted data (E) is stored in the memory of the keycard-lock, and the keycard is registered in the keycard-lock.

Fig. 19 (b) shows the steps of using the keycard to lock/unlock the keycard-lock.
(1) The keycard that has been registered is inserted into the keycard-lock.

(2) The analog information which is the pattern to be recognized is read by the reading device of the keycard-lock.

(3) The analog information thus read, which is the information of the keycard information chip is digitalized to digital data (M').

(4) The stored encrypted data (E) is read out from the memory of the keycard-lock.

(5) The encrypted data (E) is decrypted by the crypt key stored in the reading device of the keycard-lock to decrypted digital data (M).

(6) The digital data (M' ) of the keycard which is inserted and the digital data (M) read from the keycard-lock and decrypted are compared and confirmed that they are equal.

(7) If the digital data (M' ) and digital data (M) are equal, the keycard-lock is locked/unlocked.

If the digital data (M' ) and digital data (M) are not equal, and more than one digital data is stored, plural digital data are sequentially read out, compared and confirmed.

If all digital data do not match, the keycard is determined to be illegitimate, or to have any damage or stain, and the keycard-lock is not locked/unlocked.

It should be noted that containing the keycard in a container with a shutter, using structural variations of the reading device for reading, and actively using variations in digitalization time axis and thresholds, as described above referring to Fig. 18, are the same for this Embodiment, and additional description will be omitted.

### [Embodiment 8]

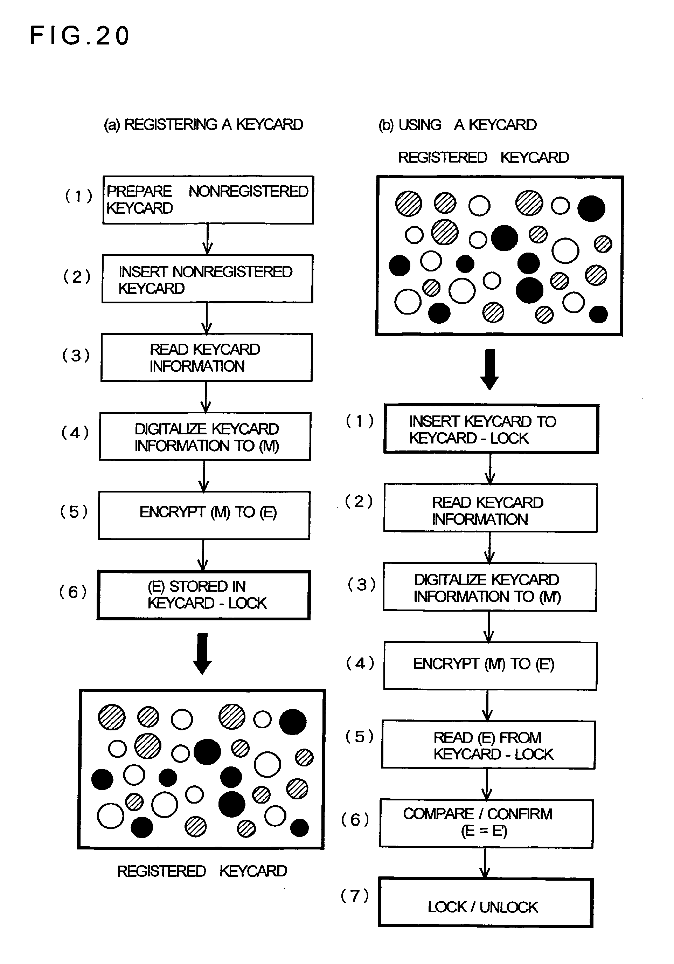

Fig. 20 shows another example in which cryptography is used.
Fig. 20 (a) shows steps of preparing the keycard for use, and (b) shows steps of processing when using the keycard to lock/unlock the keycard-lock.
These steps are performed by optical reading or radiation detection means and a computer.

Fig. 20 (a) shows the steps of registering the keycard.
(1) A keycard which has not been registered is prepared.
In the nonregistered keycard, a keycard information chip is formed as a chip as shown in Fig. 13, or on the entire surface of the keycard as shown in Fig. 14.

(2) The keycard is, for registration, inserted into the reading device of the keycard-lock with which the key is used.

(3) Analog information, which the keycard information chip has, is read by the reading device of the keycard-lock.

(4) In order to digitally process the pattern to be recognized, the analog information of the keycard information chip, thus read, is digitalized to digital data (M).

(5) The digital data (M) is encrypted by a crypt key stored in the keycard-lock to encrypted data (E).

(6) The encrypted data (E) is stored in the memory of the keycard-lock, and the keycard is registered in the keycard-lock.

Fig. 20 (b) shows the steps of using the keycard to lock/unlock the keycard-lock.
(1) The keycard that has been registered is inserted into the keycard-lock.

(2) The analog information which is the pattern to be recognized is read by the reading device of the keycard-lock.

(3) The analog information thus read, which is the information of the keycard information chip is digitalized to digital data (M').

(4) The digital data (M' ) is encrypted by a crypt key stored in the reading device of the keycard-lock to encrypted data (E').

(5) The stored encrypted data (E) is read out from the memory of the keycard-lock.

(6) The encrypted data (E' ) of the keycard which is inserted and the encrypted data (E) read from the keycard-lock and decrypted are compared and confirmed that they are equal.

(7) If the digital data (E' ) and digital data (E) are equal, the keycard is determined to be valid and performs to lock/unlock the keycard-lock.

If the digital data (E' ) and digital data (E) are not equal, and more than one digital data is stored, plural digital data are sequentially read out, compared and confirmed.

If all digital data do not match, the keycard is determined to be illegitimate, or to have any damage or stain, and does not perform to lock/unlock.

It should be noted that containing the keycard in a container with a shutter, actively using variations of the reading device for reading, and using variations in digitalization time axis and thresholds, as described above referring to Fig. 18, are the same for this Embodiment, and thus, additional description will be omitted.

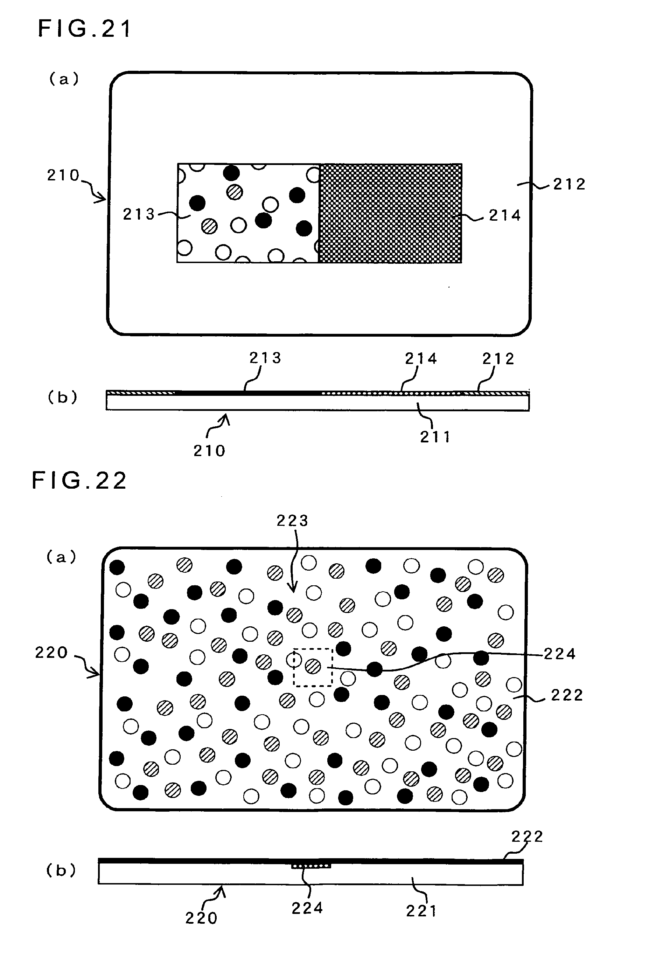

Figs. 21 and 22 show Embodiments of a keycard in which the security of the keycard shown in Figs. 13 and 14 is further increased.
These keycards have a keycard information chip for self-certifying the authenticity of the keycard itself.
In addition, in order to prevent damages or stains, self-certifying keycards shown in Figs. 21 and 22 may be formed in the keycard contained in the container shown in Fig. 15, 16 or 17.

### [Embodiment 9]

Fig. 21 (a) shows a general view of the self-certifying keycard, and Fig. 21 (b) a cross-sectional view.
In a self-certifying keycard 210, a keycard information chip 213 which is mounted at the center of a surface plate 212 attached to a substrate 211, and a certifying chip 214 comprising colored two-dimensional barcode or the like where keycard information of the keycard information chip 213 is digitalized, the digitalized data is encrypted by using a crypt key stored in the keycard-lock and the encrypted data is stored, are non-removably attached to in such a manner that is integrated with the substrate 211.

### [Embodiment 10]

Fig. 22 (a) shows a general view of the self-certifying keycard, and Fig. 22 (b) a cross-sectional view.
In a self-certifying keycard 220, a keycard information chip 223 which is mounted on the entire surface of a surface plate 222 attached to a substrate 221 and a self-certifying chip 224 comprising a transponder IC such as RFID, where keycard information of the keycard information chip 223 is digitalized, the digitalized data is encrypted and the encrypted data is stored, are non-removably integrated.

Instead of the chip comprising colored two-dimensional barcode for verification used in the keycard shown in Fig. 21, a transponder IC may be used, and instead of the transponder IC used for the keycard shown in Fig. 22, the chip comprising colored two-dimensional barcode for verification may be used.

### [Embodiment 11]

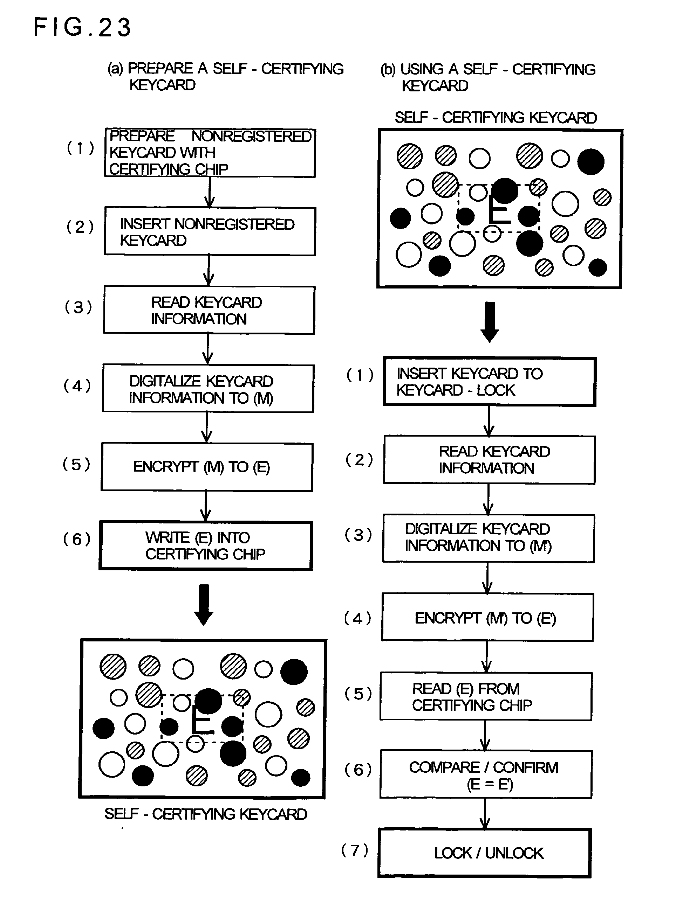

Fig. 23 shows the operation when the self-certifying keycard shown in Figs. 21 and 22 is used.
Fig. 23 (a) shows steps of preparing the self-certifying keycard for use, and (b) shows steps of processing when using the self-certifying keycard to lock/unlock the keycard-lock.
These steps are performed by optical reading or radiation detection means and a computer.

Fig. 23 (a) shows the steps of registering the self-certifying keycard in the keycard-lock.
(1) A nonregistered self-certifying keycard to which a self-certifying chip is attached is prepared.

In the nonregistered self-certifying keycard, a keycard information chip is formed as a chip shown in Fig. 21, or on the entire surface of the self-certifying keycard shown in Fig. 22.
In addition, if needed, in order to prevent damages and stains, as shown in Fig. 15, 16 or 17, the self-certifying keycard is contained in a container with a shutter.
Since the keycard information chip has the information of the planar placement and the three-dimensional placement which are determined by chance, forgery and duplication are impossible.

(2) The self-certifying keycard is, for registration, inserted into the keycard-lock with which the keycard is used.

(3) Analog information, which the keycard information chip has, is read by the reading device of the keycard-lock.
If the reading device, which will be described later, is constituted in such a way that there are variations in the reading by the reading device, combined with the analog information on the keycard information chip, that strengthens the correspondence between the keycard and the keycard-lock.

(4) In order to digitally process the pattern to be recognized, the analog information of the keycard information chip, thus read, is digitalized to digital data (M).

(5) The digital data (M) is encrypted by a crypt key stored in the reading device of the keycard-lock to encrypted data (E).

(6) The encrypted data (E) is stored in the certifying chip of the self-certifying keycard, and the self-certifying keycard is registered in the keycard-lock.

The steps of using the keycard shown in Fig. 23 (b) is performed as follows:
(1) The self-certifying keycard that has been registered is inserted into the reading device of the keycard-lock.

(2) The analog information which is the information pattern to be recognized is read by the reading device.

(3) The analog information, thus read, which is the information of the keycard information chip, is digitalized to digital data (M').

(4) The digital data (M' ) is encrypted by the crypt key stored in the reading device of the keycard-lock to encrypted data (E').

(5) The stored encrypted data (E) is read out from the memory of the keycard-lock.

(6) The encrypted data (E' ) of the self-certifying keycard which is inserted and the encrypted data (E) read out from the memory of the keycard-lock are compared and confirmed that they are equal.

(7) If the digital data (E' ) and digital data (E) are equal, the keycard-lock is locked/unlocked.

If the digital data (E' ) and digital data (E) are not equal, and more than one digital data is stored, plural digital data are sequentially read out, compared and confirmed.

If all digital data do not match, the keycard is determined to be illegitimate, or to have any damage or stain, and the keycard-lock is not locked/unlocked.

In addition to the above, more reliable confirmation can be performed by storing the digital data (M) of the self-certifying keycard in the keycard-lock at the time of the registration of the self-certifying keycard in the keycard-lock, and comparing with the digital data (M' ) read from the self-certifying keycard during use.

It should be noted that containing the keycard in a set with a shutter, using structural variations in the reading by the reading device, and using variations in digitalization time axis and thresholds, as described referring to Fig. 18, are the same for this Embodiment, and thus, additional description will be omitted.

### [Embodiment 12]

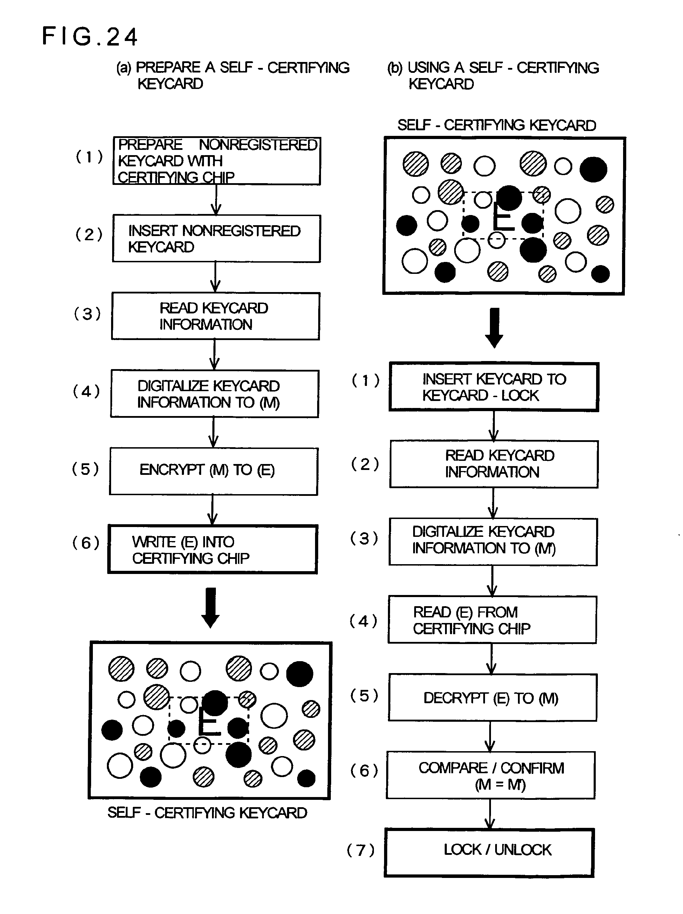

Fig. 24 describes another example using cryptography.
Fig. 24 (a) shows steps of preparing the keycard for use, and Fig. 24 (b) shows steps of processing when using the keycard to lock/unlock the keycard-lock.
These steps are performed by optical reading or radiation detection means and a computer.

The steps of registering the keycard are shown in Fig. 24 (a).
(1) A keycard which has not been registered is prepared.
In the nonregistered keycard, a keycard information chip is formed as a chip shown in Fig. 13, or on the entire surface of the keycard shown in Fig. 14.

(2) The keycard is, for registration, inserted into the reading device of the keycard-lock with which the keycard is used.

(3) Analog information, which the keycard information chip has, is read by the reading device of the keycard-lock.

(4) In order to digitally process the pattern to be recognized, the analog information of the keycard information chip, thus read, is digitalized to digital data (M).

(5) The digital data (M) is encrypted by a crypt key stored in the reading device of the keycard-lock to encrypted data (E).

(6) The encrypted data (E) is stored in the certifying chip of the self-certifying keycard, and the self-certifying keycard is registered in the keycard-lock.

The steps of using the keycard to lock/unlock the lock are shown in Fig. 24 (b).
(1) The keycard that has been registered is inserted into the reading device of the keycard-lock.

(2) The analog information which is the information pattern to be recognized is read by the reading device of the keycard-lock.

(3) The information of the keycard information chip which is analog information, thus read, is digitalized to digital data (M').

(4) The digital data (M' ) is encrypted by a crypt key stored in the reading device of the keycard-lock to encrypted data (E').

(5) The stored encrypted data (E) is read out from the memory of the keycard-lock.

(6) The encrypted data (E' ) of the keycard which is inserted and the encrypted data (E) read out from the memory of the keycard-lock and decrypted are compared and confirmed that they are equal.

(7) If the digital data (E' ) and digital data (E) are equal, the keycard is determined to be valid and the keycard-lock is locked/unlocked.

If the digital data (E' ) and digital data (E) are not equal, and more than one digital data is stored, plural digital data are sequentially read out, compared and confirmed.

If all digital data do not match, the keycard is determined to be illegitimate, or to have any damage or stain, and the keycard-lock is not locked/unlocked.

In addition to this configuration, a more reliable verification is performed by storing the encrypted data (E) of the self-certifying keycard in the keycard-lock at the time of registration of the self-certifying keycard in the keycard-lock, and comparing with the encrypted data (E' ) read from the self-certifying keycard and encrypted during use.

It should be noted that containing the keycard in a set with a shutter, using structural variations in the reading by the reading device, and using variations in digitalization time axis and thresholds, as described above referring to Fig. 18, are the same for this Embodiment, and thus, additional description will be omitted.

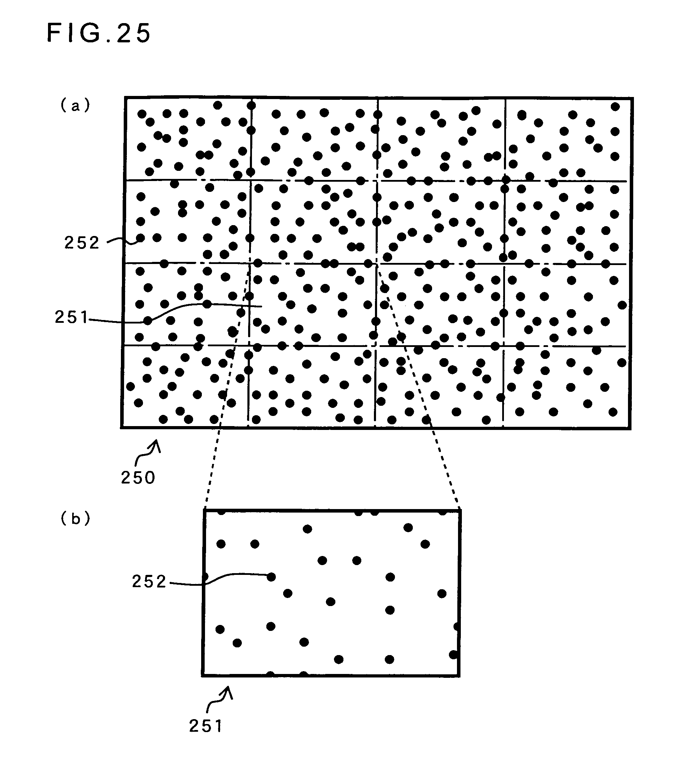

The method of manufacturing a base plate that is used for a keycard will be described referring to Figs. 25 to 28.

### [Embodiment 13]

Fig. 25 shows the method of manufacturing a keycard having the information carrier arranged on the entire surface of the card shown in Figs. 14 and 22.
Reference numeral 250 shown in Fig. 25 (a) represents an original sheet having an area, for example, of 16 keycards.
The information carrier 252 is randomly scattered on the original sheet 250.
The original sheet 250 on which the information carrier 252 is randomly scattered in this manner is cut as shown in Fig. 25 (b) to obtain a keycard base 251 with the information carrier.

Since the information carrier 252 is randomly scattered on the original sheet 250, the distribution thereof is determined by chance.
In addition, since the information carrier having a three-dimensional structure is used for randomly scattered, duplicating by such a means of photographing is impossible. While transferring is the only way to obtain the same distribution, such the transfer is impossible.

The base plate obtained by cutting may be made smaller to use for a keycard information chip.

### [Embodiment 14]

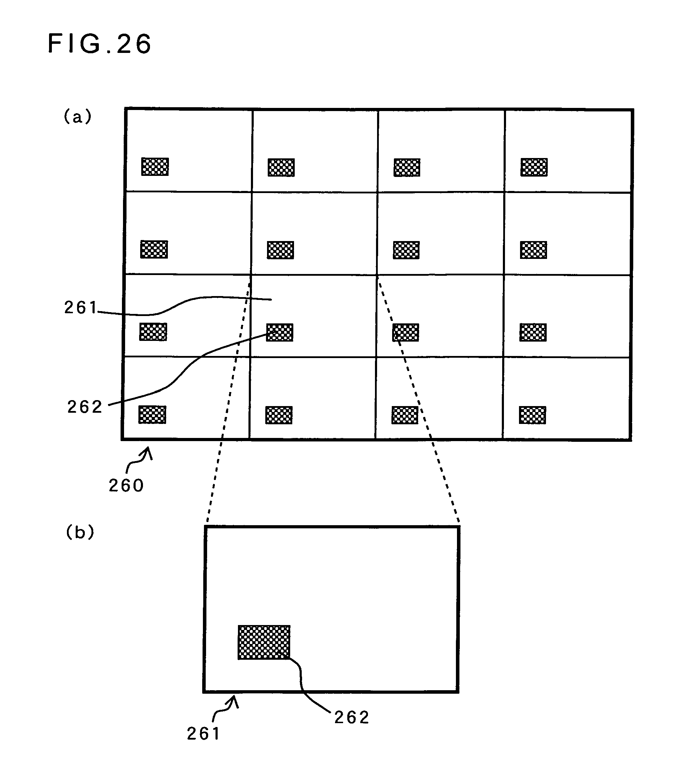

Fig. 26 shows the method of manufacturing a keycard having a keycard information chip arranged on the portion as shown in Figs. 13 and 21.
Reference numeral 260 shown in Fig. 26 (a) represents an original sheet having an area of 16 keycards.
The information carrier is randomly scattered only on portions of the original sheet 260 using a mask and the like, to obtain the original sheet for a keycard with a keycard information chip 262, which is then, cut as shown in Fig. 26 (b) to obtain a keycard base 261 with the keycard information chip 262.

Since the information carrier is randomly scattered on the original sheet, the distribution thereof is determined by chance.
In addition, since the information carrier having a three-dimensional structure is used for randomly scattered, duplicating by such a means of photographing is impossible. While transferring is the only way to obtain the same distribution, such the transfer is impossible.

### [Embodiment 15]

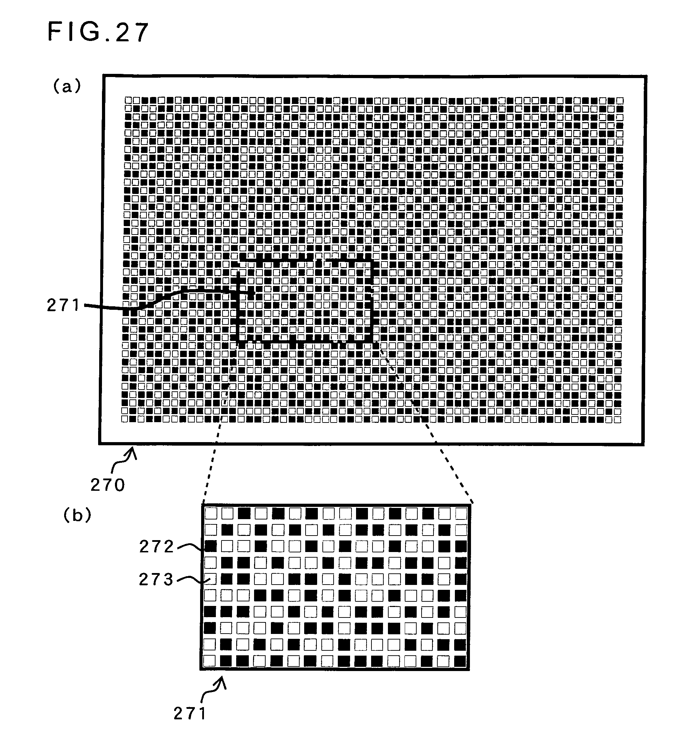

Fig. 27 shows the method of manufacturing a keycard in which the information carrier is fixedly arranged first, and only information of the information carrier is random.
Reference numeral 270 shown in Fig. 27 (a) represents an original sheet having an area of 16 keycards, and pits are arranged regularly over the entire surface of the keycard original sheet 270.

A transparent yet-to-be-solidified resin is thinly and unevenly scattered on the original sheet and solidified to obtain the original sheet for a keycard with a keycard information chip, and the original sheet is cut as shown in Fig. 27 (b) to obtain a keycard base 271.

### [Embodiment 16]

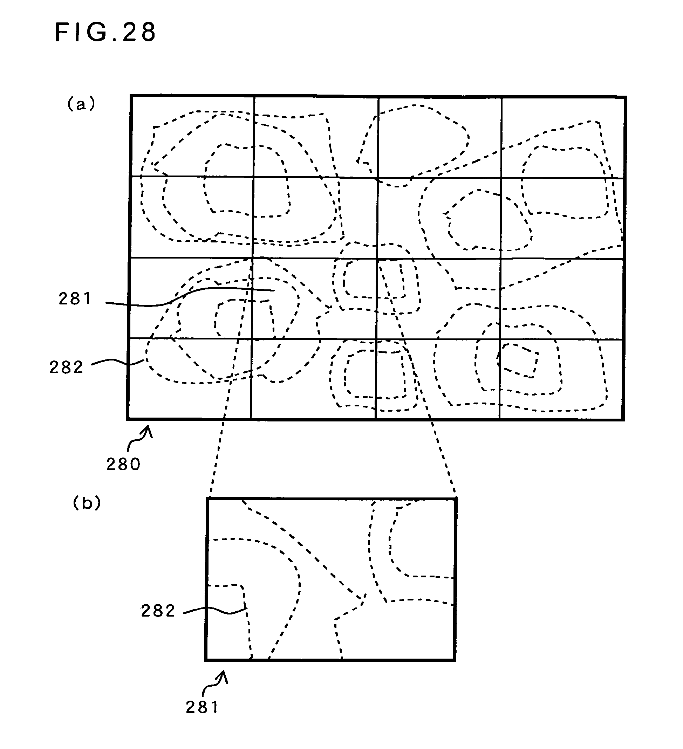

Fig. 28 shows the method of manufacturing a keycard having the information carrier arranged on the entire surface of the card shown in Figs. 11 and 12.
Reference numeral 280 shown in Fig. 28 (a) represents an original sheet having an area of 16 keycards.

A transparent yet-to-be-solidified resin 282 is unevenly spread or scattered on the original sheet and solidified to obtain the original sheet for a keycard with a keycard information chip, and the original sheet is cut as shown in Fig. 28 (b) to obtain a keycard base 281.

In the case of spread, the information pattern shown in Fig. 11 can be obtained, and in the case of scattered, the information carrier shown in Fig. 12 can be obtained.

Since the yet-to-be-solidified resin 282 is unevenly spread or scattered on the original sheet 280, the form thereof is determined by chance.
Since the form of the evenly spread or scattered resin has a three-dimensional structure, duplicating by such a means of photographing is impossible. While transferring is the only way to obtain the same form, such the transfer is impossible.
Therefore, forgery or falsification of a keycard using the hologram or iridescence, which uses light interference, is impossible.

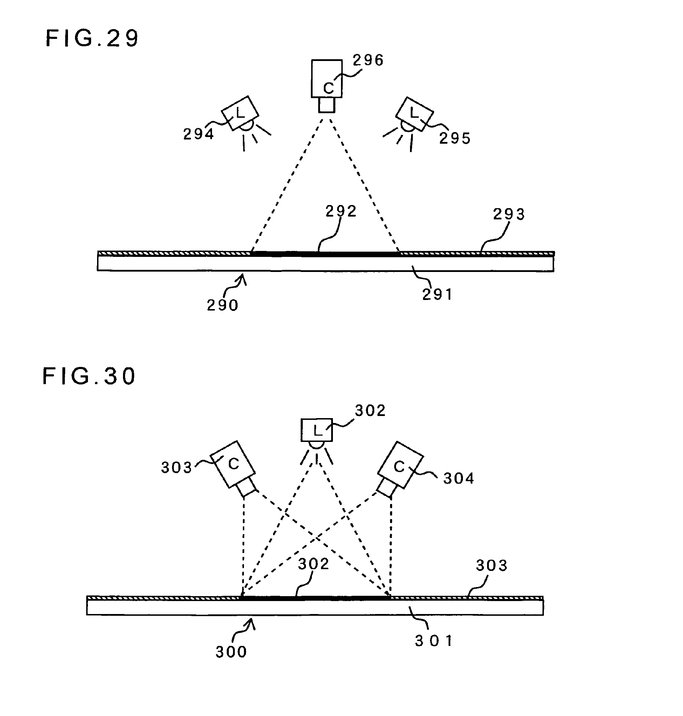

A reading device will be described referring to Figs. 29 to 34.
All the information carriers used for the keycard information chip can be detected optically. Regarding a lighting source and the light detected, since a case of the keycard information chip using the iridescent material is the simplest, the keycard information chip using the iridescent material for the information carrier will be described, and cases using other information carriers will be described only on the points that differ from the case where the iridescent material is used.
In these drawings, reference numerals 290, 300, 310 and 320 represent keycard bodies; 291, 301, 311 and 321 keycard substrates; 293, 303, 313 and 323 surface plates; and 292, 302, 312 and 322 keycard information chips.

### [Embodiment 17]

Fig. 29 shows a reading device using an image pickup device, which is the most basic arrangement to read the keycard information chip as a plane.
Reference numerals 294 and 295 represent lighting sources for lighting the keycard information chip 292, and 296 represents a camera for photographing.
The white lighting source such as a white LED, or LEDs of each R, G, B are used for the lighting sources 294 and 295.

When the white lighting source or LEDs of R, G and B which light at the same time are used for the lighting sources 294 and 295, a CCD color camera or the like is used for photographing. When the LEDs of R, G and B are used for the lighting sources 294 and 295, and light is emitted in sequence per color, a monochrome CCD camera or the like is used.
It should be noted that the type of the lighting source is not limited to the white LED, and other suitable lighting sources can be used. Further, the number of the lighting sources is not limited to one, and plural lighting sources may be used.

When an embossed hologram is used for the information carrier, it is desirable that a laser element is used as the lighting source.

When a fluorescent substance is used for the information carrier, a UVLED may be used as the lighting source.

When a radioactive substance is used for the information carrier, a fluorescent plate is brought into contact with the keycard information chip without using a lighting source, and scintillation due to radiation is detected.

When the keycard 290 is taken into a keycard-lock and stopped, the keycard information chip 292 is lighted by the lighting sources 294 and 295, photographed by the camera 296, and the keycard information on the keycard information chip 292 is read.

### [Embodiment 18]

Fig. 30 shows a reading device having different concept from that of the reading device shown in Fig. 29.
The information carrier of the keycard information chip has usually a three-dimensional structure. Accordingly, by photographing from different directions, different information can be acquired.
In this reading device, a lighting source 302, and two cameras 303 and 304 for photographing are used.
For the lighting source 302, the white LED used in Fig. 29 or an LED such as a red LED, a green LED or a blue LED is used, and the position, the type and the number thereof are determined as appropriate.

### [Embodiment 19]

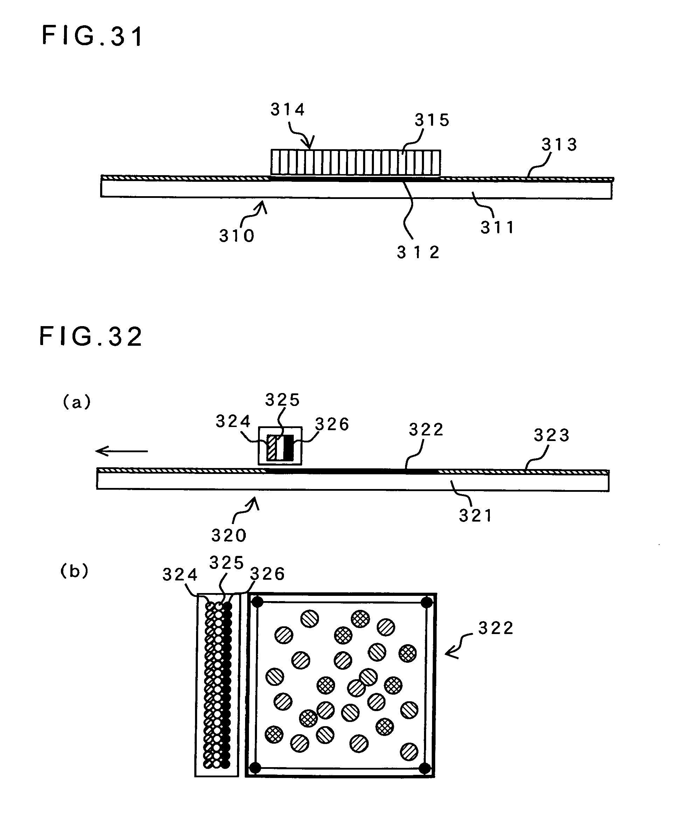

Fig. 31 shows a reading device which reads the keycard information chip as a plane.
In this figure, reference numeral 314 represents a light emitting/detecting element matrix where light emitting/detecting elements 315 which are constituted by the combination of the lighting source including a red LED, a green LED, a blue LED or the like and a small type light detecting element such as a photo diode, a photo transistor, a CCD or a CMOS, are configured in a planar shape so as to cover up the keycard information chip 312.
It should be noted that the type of the lighting source is not limited to three red, green and blue LEDs.

When a fluorescent substance is used for the information carrier, a UVLED may be used as the lighting source.

When a radioactive substance is used for the information carrier, a fluorescent plate is brought into contact with the keycard information chip without using a lighting source, and scintillation due to radiation is detected.

When the keycard 310 is taken into a keycard-lock and stopped, the keycard information chip 312 is positioned under the light emitting/detecting element matrix 314 in planar shape. Under this condition, the light emitting/detecting elements comprised in the light emitting/detecting element matrix 314 and arranged in planar shape detect the information pattern of the keycard information chip 312, and the keycard information from the keycard information chip 312 is read.
By adopting a field-sequential-color system emitting the light per color in sequence, the number of the light detecting elements can be reduced extensively.

### [Embodiment 20]

Fig. 32 shows a reading device that reads the plane of the keycard information chip as an assembly of lines.
Fig. 32 (a) shows a general arrangement of a detecting unit of the keycard information chip reading device, and Fig. 32 (b) shows the correspondence between the card and the light detecting unit for linear detecting.

A red light emitting/detecting element array 324, a green light emitting/detecting element array 325, and a blue light emitting/detecting element array 326 are placed in a container having a width slightly longer than the width in moving direction of the keycard information chip 322.

The red light emitting/detecting element array 324, the green light emitting/detecting element array 325, and the blue light emitting/detecting element array 326 are given here as examples, and any combination of colors of light emitting/detecting elements can be used.

In addition, both of the point source and the line source for light emitting/detecting elements may be used.

When an embossed hologram is used as the information carrier, it is desirable to use a laser element for the lighting source.

When a fluorescent substance is used as the information carrier, UVLED of one row may be used for the lighting source.

When a radioactive substance is used as the information carrier, a fluorescent plate is brought into contact with the keycard information chip without using the lighting source, and the light emitted is detected by scintillation.

Unlike the reading devices shown in Figs. 29 to 31, in the reading device of Fig. 32, the keycard information on the keycard information chip 322 is read during the time when the keycard-lock 320 is being taken into the reading device, not after it is taken into the reading device and is stopped.

When the keycard-lock 320 is taken into the reading device, it passes under the light emitting/detecting element arrays 324, 325, 326. At this moment, the linearly arranged arrays of the light emitting/detecting elements detect the information pattern in the keycard information chip 322. Electric signals generated in association with the movement of the keycard information chip 322 are detected continuously in analog manner by each light detecting element or discontinuously in digital manner, or scanned as an image like using a facsimile machine or a scanner, and then, the card information of the keycard information chip 322 is read.
By adopting a field-sequential-color system emitting the light per color in sequence, the number of the light detecting elements can be reduced extensively.

### [Embodiment 21]

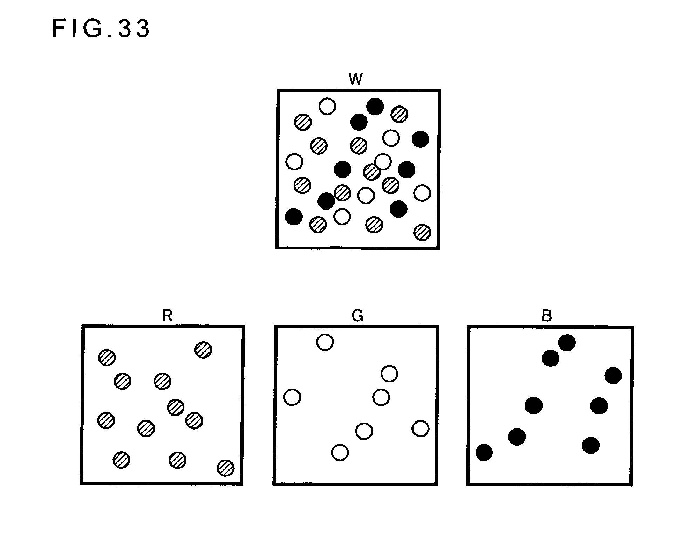

An authenticity judging method will be described referring to Figs. 33 to 35 by taking an example a case where the reading device of Fig. 29 is used.
The information carriers used for a keycard information chip can be all detected optically. Regarding the lighting source and the light detected, the keycard information chip using iridescent material is the simplest. The keycard information chip using the iridescent material as the information carrier will be described.

W (White) in Fig. 33 shows an example where the keycard information chip is photographed by the combination of the white LED and the color camera and where the iridescent material of all R, G and B are detected.
The drawings indicated by R, G and B underneath show conditions of the iridescent material showing each of colors separated by a color filter of the camera.

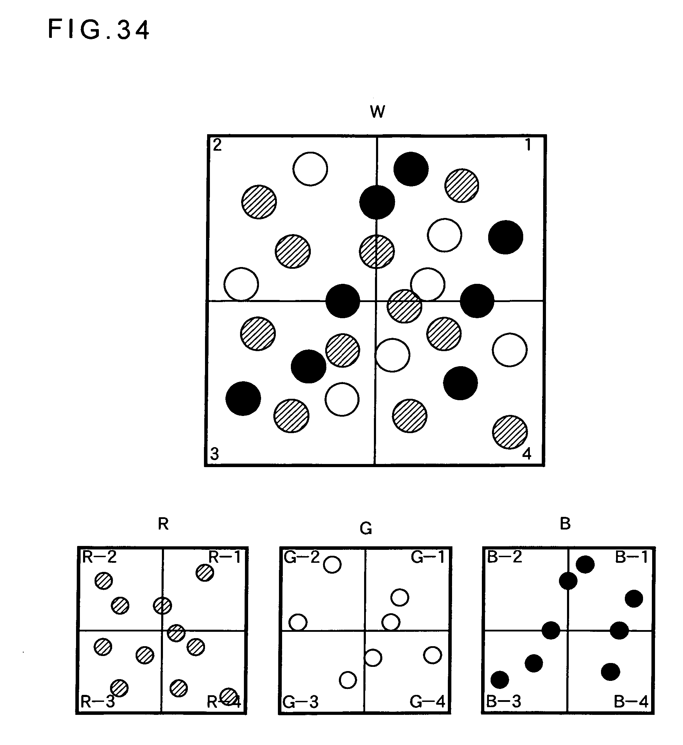

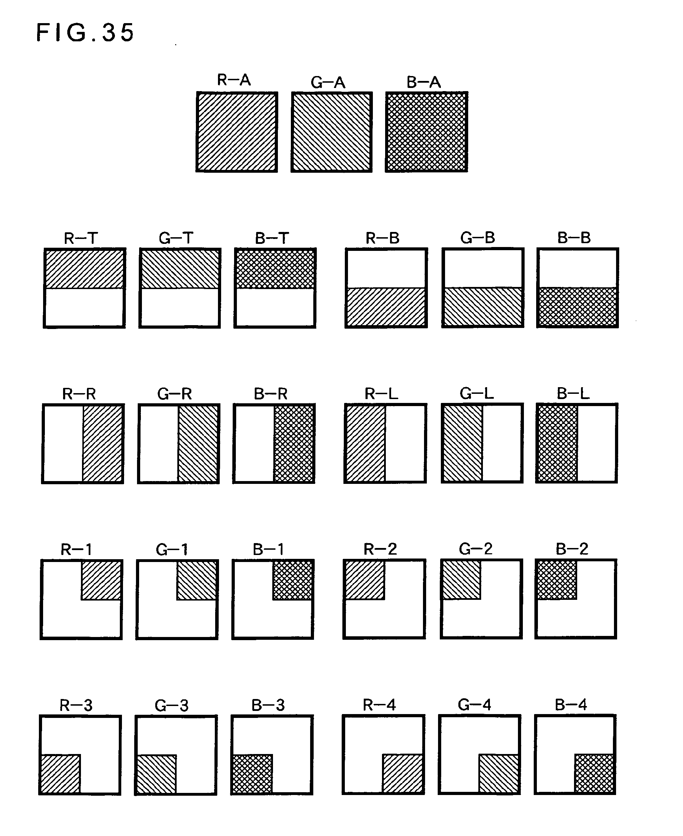

In Figs. 34 and 35, W, R, G, B correspond to W, R, G and B of Fig. 44, respectively. In each drawing, the image is divided in four portions: the first quadrant is referred by a numeral 1; the second quadrant by a numeral 2; the third quadrant by a numeral 3; and the fourth quadrant by a numeral 4.

As the other manner of dividing, divided by a diagonal line may be adopted, or further, subdivisions can be performed when necessary.

In this method, a pattern of the images divided is not detected. Instead, the average light intensity of the iridescence, i.e., the total light intensity, is detected.
In these drawings, the symbol [-A] indicates the total light intensity of the color in all portions of the keycard information chip. The symbol [-T] indicates the total light intensity of the color in the upper half of the keycard information chip; the symbol [-B] the total light intensity of the color in the lower half of the keycard information chip; [-R] the total light intensity of the color in the right half of the keycard information chip; [-L] the total light intensity of the color in the left half of the keycard information chip; and the symbols [-1] to [-4] each indicates the total light intensity of the color in each of quadrants of the keycard information chip.

By the procedure as described above, the information of the total light intensity, i.e., 9 types of information for each of the R, G and B, and 27 types of information in total can be known.
Through the comparison of the total light intensity information which is obtained from the keycard information chip at the time of manufacturing and is stored, and the total light intensity information obtained when the keycard information chip is detected, the authenticity of the keycard information chip can be judged.

The white light obtained by the white LED is a pseudo-white color. Also, the white color detected by the color camera is a pseudo-white color because a color filter is used.
Accordingly, the detection of the light through the combination of the white LED and the color camera is limited only to the light, which can be detected by the combination of the light emitting color and the color filter. In this respect, care must be taken as to which type of white LED is used or which type of color camera is used.

In order to satisfy the accuracy of the color to be used, it is desirable to use the color information based on physical color information, that is to say, the wavelength, not on visual sense.

In addition to a visible light LED used as an LED for a lighting source, an ultraviolet LED and an infrared LED are used in combination or selectively, thereby making unauthorized reading difficult.

Further, using laser light sources having different wavelengths and a non-linear element, the light of the frequency, which is obtained as a difference between frequencies or a sum of frequencies may be used.

As other items to be used for the judgment, there are the value of the highest luminance in each area, the number of pixels where luminance is higher than a predetermined value, the number of assemblies of bright pixels, the length of contour of the bright pixel, characteristics of the bright pixel, the weighted point of dispersed bright points, the peak position and peak value in longitudinal and lateral histogram on an binarized image, and the histogram of each pixel through weighting of luminance information.

### Industrial Applicability

Duplicating a keycard used in the keycard and keycard-lock system described above is impossible in principle, while registering the keycard in the keycard-lock makes plural keycard-locks be easily available.

With such characteristics, in particular, when it is used for a keycard for vehicles, it functions also as an immobilizer, and is useful.

In addition, it is useful for a key for a facility or a room where plural relevant parties come in and out, such as for using for an admission allowance.

It is also useful for a key used in a shared-use system such as a car-sharing system.

### Reference Numerals

11, 21, 33, 43, 53, 61, 1, 91, 111, 121, 144: transparent resin
12: metal granule
22: fiber piece
31, 42, 46: pit
62: fluorescent substance granule
72: radioactive substance granule
82, 102, 143: thin iridescent piece
93, 112, 122: resin
130, 140, 151, 161, 171, 210, 220: keycard
131, 141, 211, 221: substrate
133, 213, 223, 252, 262: keycard information chip
145: transparent resin
142, 143, 144: thin iridescent piece
150: keycard
152, 162: container
153, 163, 173: shutter
154, 164, 174: window for reading
155, 175: cover plate
156: housing
160, 170: keycard
212, 222: surface plate
214, 224: certifying chip
250, 260, 270, 280: original sheet
251, 261, 271, 281: keycard base with the keycard information
282: yet-to-be-solidified resin
290, 300, 310, 320: keycard body
291, 301, 311, 321: keycard substrate
292, 302, 312, 322: keycard information chip
293, 303, 313, 323: surface plate
294, 295: lighting source
296, 303, 304: camera
314: light emitting/detecting element matrix
315: light emitting/detecting element
324: red light emitting/detecting element array
325: green light emitting/detecting element array
326: blue light emitting/detecting element array

## Claims

1. A keycard/keycard-lock system comprising a keycard including a card to which three-dimensional key information randomly formed on a surface is non-removably provided, and a keycard-lock which is locked/unlocked by said three-dimensional key information of said keycard.

2. The keycard according to claim 1, said three-dimensional key information comprising metal granules mixed at random positions in a transparent medium.

3. The keycard according to claim 1, said three-dimensional key information comprising fiber pieces mixed at random positions in a transparent medium.

4. The keycard according to claim 1, said three-dimensional key information comprising pits on hologram formed at random positions.

5. The keycard according to claim 1, said three-dimensional key information comprising fluorescent substance granules mixed at random positions in a transparent medium.

6. The keycard according to claim 1, said three-dimensional key information comprising iridescent pieces mixed at random positions in a transparent medium.

7. The keycard according to claim 1, said three-dimensional key information comprising droplets of iridescent material disposed at random positions.

8. The keycard according to claim 1, said three-dimensional key information comprising a layer of iridescent material spread unevenly.

9. The keycard according to claim 1, said three-dimensional key information comprising iridescent pieces mixed at random positions in a transparent medium.

10. The keycard according to claim 1, said three-dimensional key information comprising radioactive substance granules disposed at random positions.

11. The keycard according to claims 4, 5, 6, 7, 8 and 9, wherein said three-dimensional key information includes multicolored information.

12. The keycard according to claim 1, wherein the card is housed in a container with a shutter.

13. The keycard according to claim 1, further comprising a self-certifying chip, wherein encrypted data of said three-dimensional key information is stored in said self-certifying chip.

14. The keycard-lock according to claim 1, wherein the key information being three-dimensional and at a random position on said keycard is registered, and when the registered three-dimensional key information is read, the keycard-lock is locked/unlocked.

15. The keycard-lock according to claim 13, wherein said three-dimensional key information is encrypted and registered.

## Amended claims

### Amended claims under Art. 19.1 PCT

**1.** A keycard/keycard-lock system comprising a keycard including a card to which three-dimensional key information randomly formed on a surface is non-removably provided, and a keycard-lock which is locked/unlocked by said three-dimensional key information of said keycard.

**2.** The keycard according to claim 1, said three-dimensional key information comprising metal granules mixed at random positions in a transparent medium.

**3.** The keycard according to claim 1, said three-dimensional key information comprising fiber pieces mixed at random positions in a transparent medium.

**4.** The keycard according to claim 1, said three-dimensional key information comprising pits on hologram formed at random positions.

**5.** The keycard according to claim 1, said three-dimensional key information comprising fluorescent substance granules mixed at random positions in a transparent medium.

**6.** The keycard according to claim 1, said three-dimensional key information comprising iridescent pieces mixed at random positions in a transparent medium.

**7.** The keycard according to claim 1, said three-dimensional key information comprising droplets of iridescent material disposed at random positions.

**8.** The keycard according to claim 1, said three-dimensional key information comprising a layer of iridescent material spread unevenly.

**9.** The keycard according to claim 1, said three-dimensional key information comprising iridescent pieces mixed at random positions in a transparent medium.

**10.** The keycard according to claim 1, said three-dimensional key information comprising radioactive substance granules disposed at random positions.

**11.** The keycard according to claims 4, 5, 6, 7, 8 and 9, wherein said three-dimensional key information includes multicolored information.

**12.** The keycard according to claim 1, wherein the card is housed in a container with a shutter.

**13.** The keycard according to claim 1, further comprising a self-certifying chip, wherein encrypted data of said three-dimensional key information is stored in said self-certifying chip.

**14.** The keycard-lock according to claim 1, wherein the key information being three-dimensional and at a random position on said keycard is registered, and when the registered three-dimensional key information is read, the keycard-lock is locked/unlocked.

**15.** The keycard-lock according to claim 14, wherein said three-dimensional key information is encrypted and registered.

Statement under Art. 19.1 PCT
· In claim 8, minor clerical error in Japanese language is amended.

· In claim 15, dependency is amended to "... according to claim 14".
